(19) Europäisches Patentamt
European Patent Office
Office européen des brevets

(11) EP 0 390 299 B2

(12) NEW EUROPEAN PATENT SPECIFICATION

(45) Date of publication and mention of the opposition decision:
**12.07.2000 Bulletin 2000/28**

(45) Mention of the grant of the patent:
**14.07.1993 Bulletin 1993/28**

(21) Application number: **90250067.7**

(22) Date of filing: **14.03.1990**

(51) Int. Cl.[7]: **A23L 1/236**, A23L 1/314, A23L 1/30

# (54) Foodstuffs containing maltitol as sweetener or fat replacement

Maltitol enthaltende Nahrungsmittel als Süssmittel oder Fettersatz

Denrées alimentaires contenant de maltitol comme édulcorant ou produit remplaçant le gras

(84) Designated Contracting States:
**AT BE CH DE DK ES FR GB GR IT LI LU NL SE**

(30) Priority: **30.03.1989 US 330670**

(43) Date of publication of application:
**03.10.1990 Bulletin 1990/40**

(73) Proprietor:
**TOWA CHEMICAL INDUSTRY CO., LTD.**
**Chuo-ku, Tokyo 104 (JP)**

(72) Inventors:
- **Bakal, Abraham I.**
  **Parsippany, New Jersey 07054 (US)**
- **Nanbu, Shoichi**
  **Yokohama-shi, Kanagawa 221 (JP)**
- **Muraoka, Toshiaki**
  **Yokohama-shi, Nanagawa 230 (JP)**

(74) Representative:
**Kremer, Robert A.M. et al**
**BUREAU D.A. CASALONGA - JOSSE**
**Morassistrasse 8**
**80469 München (DE)**

(56) References cited:

| | |
|---|---|
| **EP-A- 0 218 277** | **DE-A- 2 348 183** |
| **FR-A- 2 499 576** | **US-A- 3 717 711** |
| **US-A- 3 918 986** | **US-A- 4 011 349** |

- **Conference given by F. Pierson at the Centralfachschule der Deutschen Süsswarenwirtschaft, Solingen (DE), 11-15.5.87 "Technologie des pâtes chocolat à base de sorbitol et de maltitol"**
- **New food industry, Vol. 24, n° 11 (1982), p. 14-19, Aoki Ikuo (Towa Kasei Kogyo) and its french translation**
- **Standard tables of food composition in Japan, 4th ed., 1982, Resources Council, Science and Technology Agency (JP), p. 82-83**
- **Tables of food compositions on the market - latest edition, Joshi Eiyo Daigaku Shuppan Bu, 1.4.83, p. 129**
- **Tables de compositions des aliments, L. Randouin, p. 88-89, 1981**
- **Dietetic chocolate, Confectionery Production, vol. 32, 2.66**
- **"Sugar confectionery and chocolate manufacture" R. Lees et E.B. Jackson, Leonard Hill Books, An Intertext Publisher, Plymouth, 1973**
- **"Les bases de la pâtisserie, confiserie, glacerie" M. Vitalis, Editions J. Lanore, Paris, 1979**
- **"Silesia Confiserie Manual n° 1" A. Meiners et H. Joike, Silesia-Essenzenfabrik, Gerhard Hanke K.G., Abt. Frachbücherei, 1969**
- **"Silesia Confiserie Manual n° 3" A. Meiners K. Kreiten et H. Joike, Silesia-Essenzenfabrik Gerhard Hanke K.G., Abt. Fachbücherei, 1984**
- **"CODETALLOZ" A. Allonsius, Revues et annuaire de C.C.C.B.P.G., 1954**
- **"Pour le pâtissier Confiseur" F.J. Dégerine, Tome II, Dunod, 1953**
- **"Techniques modernes de la biscuiterie, pâtisserie-boulangerie industrielles et artisanales et des produits de régime" J.L. Kiger et J.G. Kiger, tome II, Dunod, 1968**
- **"The properties and applications of Malbit" Fusao Naito-Hayashibara Biochemical Laboratories, Inc. New Food Industry, vol. 13, n° 9, 1971**



Printed by Xerox (UK) Business Services
2.16.7 (HRS)/3.6

## Description

FIELD OF THE INVENTION

This invention relates to foodsutffs containing maltitol. More particularly, this invention relates to foodstuffs containing an effective amount of maltitol as a fat replacement.

BACKGROUND OF THE INVENTION

Maltitol is a sugar alcohol approved for use in many European countries and in Japan. Maltitol is available in syrup or powder form and is typically used as a replacement for sugar in sugarless products. Such sugarless products have consumer appeal for the following reasons:

(1) Maltitol metabolism does not require insulin, making it an acceptable sugar substitute for diabetics;
(2) Since maltitol is not fermented by the oral microflora, it does not contribute to tooth decay; and
(3) Maltitol has superior taste quality in comparison to sorbitol, the leading sugar alcohol. In addition, the sweetness potency of maltitol is higher than that of sorbitol.

In Japan, maltitol is used extensively as a total replacement of sugar in a variety of foods, including candies, chocolate, table-top sweetener, salad dressings, etc. It is preferred over sorbitol in many of these applications because of its sweet taste.

Also, the scientific literature clearly indicates that a strong relationship exists between food and health. A recently published Surgeon General's report on nutrition and health identified several dietary components which play an important role in the prevention of disease. Prominent among recommendations made by the Surgeon General was the reduction of fat consumption, especially the consumption of saturated fat. High consumption of fat has been linked to high blood cholesterol and increased risk of coronary heart disease. In addition, each gram of fat contains 9 calories, versus 4 calories for a gram of protein or carbohydrate. Thus, the caloric contribution of fat to food products is significantly higher than other food components.

Fat plays an important role in the acceptability of foods, in addition to its role as a medium for frying and other processing. Fat-containing foods are more acceptable than those lean in fat because fat provides creamy, rich mouthfeel and related organoleptic properties, which highly impact consumer acceptance of foods.

All of the above clearly indicates that a need exists for ingredients which can substitute fats in food formulations while maintaining the organoleptic properties, i.e., creamy mouthfeel of these products.

OBJECTS OF THE INVENTION

It is an object of the invention to provide improved foodstuffs.

It is also an object of the invention to provide a foodstuff containing an effective amount of maltitol as a fat replacement.

It is a yet further object of the invention to provide an improved foodstuff wherein the improvement comprises the partial or total replacement of the fat by an effective amount of maltitol composition containing from 75 to 99% by weight of maltitol, the maltitol composition imparting the creamy mouthfeel of fat.

These and other objects of the invention will become more apparent in the discussion below.

DETAILED DESCRIPTION OF THE INVENTION

It has been unexpectedly found that maltitol is useful as a sweetener or sweetener replacement as well as a fat replacement, in foodstuffs. More particularly, the invention herein is directed to improved sweetened foodstuffs wherein the improvement comprises an effective amount of a maltitol composition containing from 75 to 99% by weight of dry maltitol.

Maltitol, also known as maltitol powder or hydrogenated glucose syrup powder, is the generic name for 4-0-α-D-glucopyranosyl-D-glucitol. The chemical structure of maltitol is as follows:

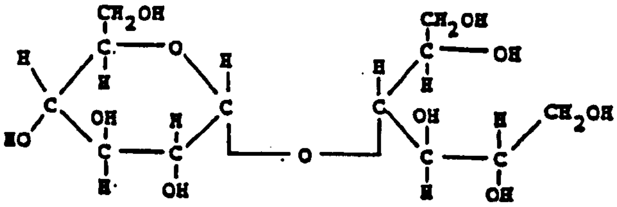

This structure has been confirmed by nuclear magnetic resonance and infrared absorption studies, which showed in particular that the 1,4-glucosidic linkage is definitely of the alpha type. Crystallographic studies have demonstrated that the molecular structure of maltitol is that of a fully extended conformation with no intramolecular hydrogen bonds. All nine hydroxyl groups are involved in intermolecular hydrogen bonds and in bifurcated, finite chains. The D-glucopyranosyl moiety has the 4Cl conformation, and the conformation about the C-5/C-6 bond is gauche-gauche. The D-glucitol residue has the bent conformation.

There are several known procedures for preparing maltitol. For example, maltitol can be manufactured by the transition metal catalytic hydrogenation of a high-maltose starch hydrolysate, which is essentially the same basic method used to manufacture sorbitol from high glucose syrups. The hydrogenated syrup is purified by removing the catalyst from the reaction liquid, followed by decolorization with activated carbon and deionization with a suitable ion-exchange resin. The liquid is concentrated to a higher solids content before crystallization. The crystals from the crystallization are pulverized and then dried to a moisture content of 1.5% or less. The dried powder is classified by sieving before packaging. Also, see the procedures for preparing maltitol disclosed in U.S. Patents Nos. 3,918,986, 3,975,976, and 4,409,041.

Maltitol is preferably used in a composition comprising from 75 to 99% by weight, based upon the total weight of the composition, of hydrogenated disaccharide, from 0 to 4% by weight of hydrogenated monosaccharide, from 1 to 11% by weight of hydrogenated trisaccharide, and from 0 to 10% by weight of hydrogenated tetrasaccharide and/or higher polysaccharides. Maltitol compositions are commercially available under the tradenames Amalty TM(USA;JP) syrup, Amalty TM(USA;JP), and Amalty TM(USA;JP) MR from Towa Chemical Industry Co., Ltd., Tokyo, Japan.

The maltitol composition can be used either alone or in combination with one or more sugar alcohols, sugars, intense sweeteners, or other materials. Examples of useful sugar alcohols include, for example, xylitol, sorbitol, mannitol, hydrogenated glucose syrup (HGS), hydrogenated starch hydrolyzate (HSH), palatinit, and lactitol. The sugar alcohol component is preferably present in an effective amount of from 0.5 to 25% by weight, based upon the total weight of the foodstuff. Useful sugars include, for example, xylose, fructose, glucose, sucrose, maltose, lactose, isomaltose, isomalto-oligo-saccharide, isomaltulose (palatinose), high fructose corn syrup, corn syrup (maltodextrin), corn syrup solids, coupling sugar, fructo-oligosaccharide, galacto-oligo-saccharide, and inverted sugar. The sugar component is preferably present in an effective amount of from 0.5 to 30% by weight, based upon the total weight of the foodstuff. Useful intense sweeteners include, for example, aspartame, alitame, acesulfame-K, trichlorosucrose (sucralose), stevioside, rebaudioside-A, and saccharine. The intense sweetener component is preferably present in an effective amount of from 0.1 to 20% by weight, based upon the total weight of the foodstuff. Polydextrose, available from Pfizer, Inc., is representative of the other materials. The other material component is preferably present in an effective amount of from 0.1 to 25% by weight, based upon the total weight of the foodstuff.

The maltitol composition described herein is preferably used as a partial or total replacement for fat in fat-containing foodstuffs. The fat component could comprise, for example, lard, lipids from cows, fish, or plants, milk fat, butter, cheese, shortening, margarine, or cooking oil or fat. The foodstuffs intended to be covered by this invention include virtually any fat-containing foodstuff known to those skilled in the art. Particular foodstuffs include brownies, pie filling, frozen desserts, salad dressings, spreads, cakes, cookies, and powdered drink mixes. In addition, maltitol can be used as a sweetener in hard candy and cough drops, sugar substitutes, soft candy, chewing gum, nonstandardized jams and jellies, cookies, and sponge cake.

The maltitol composition would be used in a sufficient or effective amount to partially or totally replace the fat component of a fat-containing foodstuff, to the extent that the foodstuff still has substantially similar organoleptic properties compared to the unsubstituted fat-containing foodstuff. One measure of the effectiveness of the fat substitute is the "mouthfeel" of the resulting product. It is a specific intention of Applicant's invention that the mouthfeel of the resulting foodstuff have substantially the same if not better mouthfeel than the original, fat-containing foodstuff.

The following examples are intended to illustrate the invention and should not be construed as limiting the invention thereto. In said examples the amount of each component is expressed as % by weight, based upon the total weight of the composition or foodstuff. Also, "DE" stands for dextrose equivalency.

EXAMPLES

Example 1

Samples of ice cream were prepared from the following ingredients:

Table I

| Sample: | Control | #1 | #2 |
|---|---|---|---|
| Water | 59.15 | 56.138 | 56.138 |
| Sugar | 14.0 | -- | -- |
| Maltitol | -- | 14.0 | -- |
| Sorbitol | -- | -- | 14.0 |
| Nonfat milk solids | 11.5 | 11.5 | 11.5 |
| Heavy cream (37% fat) | 10.8 | 10.8 | 10.8 |
| Corn syrup (42DE) | 4.0 | 4.0 | 4.0 |
| Vanilla extract (2X) | 0.25 | 0.25 | 0.25 |
| HG Special Stabilizer | 0.3 | 0.3 | 0.3 |
| Maltodextrin M-100 | -- | 3.0 | 3.0 |
| Aspartame | -- | 0.012 | 0.012 |
| | 100.0 | 100.0 | 100.0 |

The sugar (sugar alcohols), milk solids, and stabilizer were combined by use of a Lightning mixer,and then the remaining ingredients were added. The mixture was heated to 82°C (180°F), homogenized, and refrigerated at 10°C (50°F). Then the refrigerated mix was frozen in an ice cream freezer.

The ice cream samples were evaluated by a trained test panel for mouthfeel. Both the control sample and Sample #2 were judged somewhat creamy; however, Sample #1 was judged very creamy, better than the control sample and Sample #2.

The panel consisted of seven judges who had been selected for their taste acuity and who had been trained in flavor and texture profiling methods. In general, sensory procedures used were in accordance with ASTM manual for sensory testing (Manual on Sensory Testing Methods, STP 434 and Basic Principles of Sensory Evaluation, STP 433; American Society for Testing and Materials).

Example 2

Samples of ice cream were prepared according to the standard methodology described in Example 1. The formulation components were as follows:

Table II

| Sample: | Control | #1 | #2 |
|---|---|---|---|
| Water | 43.2 | 60.85 | 60.85 |
| Heavy cream (37% BF) | 28.0 | -- | -- |
| Non-fat milk solids | 12.0 | 12.0 | 12.0 |
| Granulated sugar | 12.0 | 12.0 | 12.0 |
| Corn syrup solids (35DE) | 4.0 | 4.0 | 4.0 |
| HG special stabilizer (Germantown Manufacturing) | 0.3 | 0.3 | 0.3 |
| Vanilla extract (4X) | 0.5 | 0.5 | 0.5 |
| Maltitol | -- | 10.35* | -- |
| Sorbitol | -- | -- | 10.35 |
| | 100.0 | 100.0 | 100.0 |
| Calories/100 gm | 201 | 128 | 150 |

*Assuming caloric density of 2 calories/gram.

As can be seen, the fat present in the control sample was replaced with maltitol in Sample #1 and with sorbitol in Sample #2.

The samples were evaluated for density and sensory perceptions, using known techniques. The results of said evaluation were as follows:

Table III

| Sample: | Control | #1 | #2 |
|---|---|---|---|
| Density (gm/cc) | 1.14 | 1.13 | 1.11 |
| Spoonability* (0=very soft, 8=very hard) | 6.3 | 3.5 | 2.5** |
| Creaminess* (0-8, none to extensive) | 5.8 | 5.8 | 3.8** |
| Sandiness/Grittiness* (0-8, none to extensive) | 0.0 | 0.0 | 0.0 |
| Gumminess* (0-8, none to extensive) | 1.0 | 0.8 | 2.3** |

* Average of eight observations.
** Significantly different from Control at the 95% confidence level.

The data in Table III clearly show that Sample #1, the maltitol-containing sample, was judged by the taste panel as having the creaminess of the fat-containing control sample, whereas Sample #2, the sorbitol-containing sample, was judged as less creamy and more gummy.

It is important to note that Sample #1 is fat-free and has 36% less calories than the control sample (assuming the caloric density of maltitol is 2 calories/gram).

<u>Example 3</u>

By use of standard techniques, ice milk samples were prepared in which the sugar was replaced with either maltitol or sorbitol. Sample #1 contained 4% fat and 12% maltitol by weight, and Sample #2 contained 4% fat and 12% sorbitol by weight. The formulations were as follows:

Table IV

| Sample: | Control | #1 | #2 |
| --- | --- | --- | --- |
| Water | 57.2 | 57.2 | 57.2 |
| Heavy cream (37%) | 11.0 | 11.0 | 11.0 |
| Non-fat milk solids | 13.0 | 13.0 | 13.0 |
| Granulated sugar | 12.0 | -- | -- |
| Corn syrup solids (35DE) | 6.0 | 6.0 | 6.0 |
| HG special stabilizer - Germantown Manufacturing | 0.3 | 0.3 | 0.3 |
| Vanilla extract (4X) | 0.5 | 0.5 | 0.5 |
| Maltitol | -- | 12.0 | -- |
| Sorbitol | -- | -- | 12.0 |
| | 100.0 | 100.0 | 100.0 |

The ice milk samples were evaluated for density and sensory perceptions. The results were as follows:

Table V

| Sample: | Control | #1 | #2 |
| --- | --- | --- | --- |
| Density (gm/cc) | 1.13 | 1.12 | 1.09 |
| Spoonability* (0=very soft, 8=very hard) | 5.8 | 5.0 | 4.5 |
| Creaminess* (0-8, none to extensive) | 4.8 | 6.0** | 3.3** |
| Sandiness/Grittiness* (0-8, none to extensive) | 0.0 | 0.0 | 0.0 |
| Gumminess* (0-8, none to extensive) | 0.3 | 0.0 | 0.0 |

* Average of eight observations
** Significantly different from Control at the 95% confidence level

The results above indicate that the taste panel rated Sample #1, the maltitol-containing sample, as creamier than the control sample, whereas Sample #2, the sorbitol-containing sample, was judged less creamy than the control sample.

<u>Example 4</u>

Salad dressing samples were prepared by mixing the following components:

Table VI

| Sample: | Control | #1 | #2 |
| --- | --- | --- | --- |
| Water | 40.8 | 40.8 | 40.8 |
| Distilled white vinegar | 20.0 | 20.0 | 20.0 |
| Vegetable oil | 30.0 | 15.0 | 15.0 |
| Sugar | 5.0 | 5.0 | 5.0 |
| Salt | 2.0 | 2.0 | 2.0 |
| Garlic powder | 1.0 | 1.0 | 1.0 |

Table VI (continued)

| Sample: | Control | #1 | #2 |
|---|---|---|---|
| Onion powder | 0.7 | 0.7 | 0.7 |
| Ground white pepper | 0.1 | 0.1 | 0.1 |
| Xanthan gum (Keltrol T) | 0.3 | 0.3 | 0.3 |
| Potassium sorbate | 0.1 | 0.1 | 0.1 |
| Maltitol | -- | 15.0 | -- |
| Sorbitol | -- | -- | 15.0 |
| | 100.0 | 100.0 | 100.0 |

In Sample #1, 50% of the oil was replaced with maltitol, and in Sample #2, 50% of the oil was replaced with sorbitol.

The salad dressing samples were evaluated for viscosity and sensory perceptions. The results were as follows:

Table VII

| Sample: | Control | #1 | #2 |
|---|---|---|---|
| Viscosity* | 2260 | 2800 | 2080 |
| Creaminess (0-8, none - extensive) | 5.7 | 6.8** | 4.7** |

* Brookfield viscometer - LVF, Spindle 3, Speed 30, product temperature - 4.5°C (40°F)

** Significantly different from Control at the 95% confidence level.

The results above indicate that the panel judged Sample #1, i.e. the maltitol-containing sample, as the creamiest of the three samples evaluated.

<u>Example 5</u>

No-oil Italian salad dressing samples were prepared having the following formulations:

Table VIII

| Sample: | Control | #1 | #2 |
|---|---|---|---|
| Water | 68.4 | 63.4 | 63.4 |
| Distilled white vinegar | 22.0 | 22.0 | 22.0 |
| Sugar | 5.0 | -- | -- |
| Salt | 1.9 | 1.9 | 1.9 |
| Onion powder | 0.9 | 0.9 | 0.9 |
| Garlic powder | 0.5 | 0.5 | 0.5 |
| Xanthan gum (Keltrol T) | 0.5 | 0.5 | 0.5 |
| Red pepper pieces | 0.4 | 0.4 | 0.4 |
| Mustard flour | 0.2 | 0.2 | 0.2 |
| Ground white pepper | 0.1 | 0.1 | 0.1 |
| Whole oregano flakes | 0.1 | 0.1 | 0.1 |
| Maltitol | -- | 10.0 | -- |

Table VIII (continued)

| Sample: | Control | #1 | #2 |
|---|---|---|---|
| Sorbitol | -- | -- | 10.0 |
| | 100.0 | 100.0 | 100.0 |

These samples were then evaluated for viscosity and creaminess, and the results are set forth in the following table:

Table IX

| Sample: | Control | #1 | #2 |
|---|---|---|---|
| Viscosity* | 1448 | 1672 | 1304 |
| Creaminess (N=8) (0-8, none to extensive) | 3.3 | 6.0** | 3.5 |

* Brookfield viscometer - LVF, Spindle 3, Speed 30, product temperature - 4.5°C (40°F)
** Significantly different at 95% confidence level

These results indicate that the panel judged the maltitol-containing sample, Sample #1, as creamier than both the control sample and the sorbitol-containing sample, Sample #2.

<u>Example 6</u>

Yellow cake samples were prepared from the following ingredients:

Table X

| | Sample: | Control | #1 | #2 | #3 |
|---|---|---|---|---|---|
| Part A | Sugar | 26.80 | -- | 20.10 | 13.40 |
| | Maltitol | -- | 26.80 | 6.70 | 13.40 |
| | Cake flour | 25.40 | 25.40 | 25.40 | 25.40 |
| | Water | 14.85 | 14.85 | 14.85 | 14.85 |
| | Creamtex | 12.00 | 12.00 | 12.00 | 12.00 |
| | Whole milk powder | 0.65 | 0.65 | 0.65 | 0.65 |
| | Salt | 0.60 | 0.60 | 0.60 | 0.60 |
| Part B | Water | 4.70 | 4.70 | 4.70 | 4.70 |
| Part C | Water | 10.00 | 10.00 | 10.00 | 10.00 |
| | Whole egg powder | 3.50 | 3.50 | 3.50 | 3.50 |
| | Baking powder | 1.20 | 1.20 | 1.20 | 1.20 |
| | Vanilla extract (2X) | 0.30 | 0.30 | 0.30 | 0.30 |
| | | 100.0 | 100.0 | 100.0 | 100.0 |

Each sample was prepared using standard technique. For example, first the ingredients of Part A, with the exception of water, were blended in a standard bowl. After blending, the water of Part A was added, and this mixture was mixed for 5 to 6 minutes with a Hobart mixer, Speed 2. The mixture was scraped from the sides of the bawl, the water of Part B was added, and that mixture was mixed three minutes at Speed 2. All the ingredients of Part C were added, the mixture was mixed for four minutes at Speed 2, and then the mixture was scraped from the sides of the bowl. A quantity of 450 gm of the resulting mixture was baked in an 8 x 8 in. pan at 177°C (350°F) for 30 minutes.

The samples of cake were evaluated, with the following results:

Table XI

| Sample: | Control | #1 | #2 | #3 |
|---|---|---|---|---|
| Density of Batter (gm/cc) | 0.77 | 0.84 | 0.79 | 0.78 |
| Residual Moisture (%) | 23.60 | 24.10 | 27.34 | 29.03 |
| Penetrometer | | | | |
| . Center | 127 | 140 | 210 | 212 |
| . Edge | 63 | 90 | 190 | 133 |
| Description of Texture | A | B | C | D |
| A -- Moist crumb, fine grain<br>B -- Very moist, slight gumminess and mouthcoating<br>C -- Moist crumb, fine grain<br>D -- Slight gumminess, moist crumb | | | | |

Example 7

Yellow cakes were prepared according to the formulations set forth in the following table:

Table XII

| Sample: | Control | #1 | #2 |
|---|---|---|---|
| Water | 29.25 | 29.25 | 29.25 |
| Granulated sugar | 26.80 | 26.80 | 25.80 |
| Cake flour | 25.40 | 25.40 | 25.40 |
| Creamtex | 12.00 | 6.00 | 6.00 |
| Whole egg powder | 3.50 | 3.50 | 3.50 |
| Baking powder | 1.20 | 1.20 | 1.20 |
| Nonfat milk solids | 0.65 | 0.65 | 0.65 |
| Salt | 0.60 | 0.60 | 0.60 |
| Vanilla extract (2X) | 0.60 | 0.60 | 0.60 |
| Maltitol | -- | 6.00 | -- |
| Sorbitol | -- | -- | 6.00 |
| | 100.00 | 100.00 | 100.00 |

The cake samples were evaluated for weight loss and height, and the overall sensory acceptance was determined. The results were as follows:

Table XIII

| Sample | Control | #1 | #2 |
|---|---|---|---|
| Percent weight loss from baking (%) | 12.16 | 13.35 | 12.00 |
| Height (mm) | | | |
| . Center | 4.2 | 4.0 | 4.0 |
| . Sides* | 2.5 | 2.3 | 1.8 |
| Overall Sensory | 6.0 | 5.5 | 4.0** |
| Acceptance Score (N=8) (0-8, very poor to excellent) | | | |

* Average of four sides
** Significantly different at the 95% confidence level

The results indicate that Sample #1, the maltitol-containing cake, lost somewhat more weight during drying but was basically undistinguishable from the control sample. Sample #2, the sorbitol-containing product, was densest, as indicated by the height measurements, and driest, as indicated by the overall acceptance scores.

Example 8

Chocolate chip cookies were prepared from the following ingredients:

Table XIV

| | Sample: | Control | #1 |
|---|---|---|---|
| Part A | Brown sugar | 12.3 | 12.3 |
| | Granulated sugar | 12.3 | -- |
| | Maltitol | -- | 12.3 |
| | Creamtex | 16.5 | 16.5 |
| | Salt | 0.5 | 0.5 |
| | Baking soda | 0.5 | 0.5 |
| Part B | Whole eggs | 8.2 | 8.2 |
| Part C | All purpose flour | 24.6 | 24.6 |
| | Semi-sweet chocolate chips | 24.6 | 24.6 |
| | Vanilla extract | 0.5 | 0.5 |
| | | 100.0 | 100.0 |

In a Hobart mixer, Speed 2, cream sugars (Maltitol), Creamtex, salt, and soda were mixed. Then eggs were added, and the mixture was mixed well. The remaining ingredients were mixed in. After the batter was dropped by tablespoon onto an ungreased baking sheet, the cookies were baked at 190°C (374°F) for 10 minutes.

The chocolate chip cookies prepared above were evaluated for weight loss, spread, and taste. The results were as follows:

Table XV

| Sample: | Control | #1 |
|---|---|---|
| Percent weight loss during baking (%) | 7.48* | 7.55* |
| Cookie spread during baking (cm) | 1.6** | 2.6** |
| Sensory | Sweeter | Softer, chewier texture |

* -- Average of 10 cookies
** -- One tablespoon (approx. 20± 1 grams) batter rolled into a ball and flattened to measure 4 cm in diameter. Recorded value is increased, or spread, from 4 cm.

The preceding specific embodiments are illustrative of the practice of the invention. It is to be understood, however, that other expedients known to those skilled in the art or disclosed herein, may be employed without departing from the spirit of the invention or the scope of the appended claims.

**Claims**

1. A method of preparing an improved, low-calorie, low-fat, foodstuff, which comprises the step of partially or totally replacing fat in the foodstuff by a taste effective amount of maltitol.

2. The method of claim 1, wherein the foodstuff contains up to 80% by weight of fat and is selected from the group consisting of brownies, pie filling, frozen desserts, salad dressings, spreads, cakes, cookies, powdered drink mixes, and other foods which usually contain fat.

3. The method of claim 1, wherein the fat is selected from the group consisting of lard, lipids from cows, fish, or plants, milk fat, butter, cheese, shortening, margarine, cooking oil, and cooking fat.

4. The method of claim 1, wherein the maltitol is a composition comprising from 75 to 99% by weight of hydrogenated disaccharide, from 0 to 4% by weight of hydrogenated monosaccharide, from 1 to 11% by weight of hydrogenated trisaccharide, and from 0 to 10% by weight of hydrogenated tetrasaccharide and/or higher polysaccharides, based upon the total weight of the composition.

5. The method of claim 1, wherein the maltitol is present in conjunction with from 0.5 to 25% by weight, based upon the total weight of the foodstuff, of a sugar alcohol component.

6. The method of claim 5, wherein the sugar alcohol component comprises one or more sugar alcohols selected from the group consisting of xylitol, sorbitol, mannitol, hydrogenated glucose syrup (HGS), hydrogenated starch hydrolyzate (HSH), palatinit, and lactitol.

7. The method of claim 1, wherein the maltitol is present in conjunction with from 0.5 to 30% by weight, based upon the total weight of the foodstuff, of a sugar component.

8. The method of claim 7, wherein the sugar component comprises one or more sugars selected from the group consisting of xylose, fructose, glucose, sucrose, maltose, lactose, isomaltose, isomalto-oligo-saccharide, isomaltulose (palatinose), high fructose corn syrup, corn syrup (maltodextrin), corn syrup solids, coupling sugar, fructo-oligo-saccharide, galacto-oligo-saccharide, and inverted sugar.

9. The method of claim 1, wherein the maltitol is present in conjunction with from 0.01 to 20% by weight, based upon the total weight of the foodstuff, of an intense sweetener component.

10. The method of claim 9, wherein the intense sweetener component comprises one or more intense sweeteners selected from the group consisting of aspartame, alitame, acesulfame-K, trichlorosucrose (sucralose), stevioside, rebaudioside-A, and saccharine.

11. The method of claim 1, wherein the maltitol is present in conjunction with from 0.1 to 25% by weight, based upon the total weight of the foodstuff, of polydextrose.

12. The method of claim 1, wherein the maltitol is present in an amount of from 1 to 35% by weight, based upon the total weight of the foodstuff.

13. The method of claim 1, wherein the maltitol is present in an amount of from 5 to 27% by weight, based upon the total weight of the foodstuff.

## Patentansprüche

1. Verfahren zur Herstellung eines verbesserten, kalorienarmen, fettarmen Nahrungsmittels, welches den Schritt des Teil- oder Vollersatzes von Fett im Nahrungsmittel durch eine geschmackswirksame Menge Maltitol umfaßt.

2. Verfahren nach Anspruch 1, wobei das Nahrungsmittel bis 80 Gew.-% Fett enthält und ausgewählt ist aus der Gruppe, die aus Brownies, Pastetenfüllung, gefrorenen Desserts, Salatdressings, Brotaufstrichen, Kuchen, Keksen, pulverförmigen Trinkmischungen und anderen Nahrungsmitteln, die üblicherweise Fett enthalten, besteht.

3. Verfahren nach Anspruch 1, wobei das Fett ausgewählt ist aus der Gruppe, die aus Schweinefett, Lipiden von Kühen, Fischen oder Pflanzen, Milchfett, Butter, Käse, Backfett, Margarine, Kochöl und Kochfett besteht.

4. Verfahren nach Anspruch 1, wobei das Maltitol eine Zusammensetzung ist, die von 75 bis 99 Gew.-% hydriertes Disaccharid, von 0 bis 4 Gew.-% hydriertes Monosaccharid, von 1 bis 11 Gew.-% hydriertes Trisaccharid und von 0 bis 10 Gew.-% hydriertes Tetrasaccharid und/oder höhere Polysaccharide umfaßt, bezogen auf das Gesamtgewicht der Zusammensetzung.

5. Verfahren nach Anspruch 1, wobei das Maltitol zusammen mit von 0,5 bis 25 Gew.-%, bezogen auf das Gesamtgewicht des Nahrungsmittels, einer Zuckeralkoholkomponente vorliegt.

6. Verfahren nach Anspruch 5, wobei die Zuckeralkoholkomponente einen oder mehrere Zuckeralkohole umfaßt, die ausgewählt sind aus der Gruppe, die aus Xylitol, Sorbitol, Mannitol, hydriertem Glucosesirup (HGS), hydriertem Stärkehydrolysat (HSH), Palatinit und Lactitol besteht.

7. Verfahren nach Anspruch 1, wobei das Maltitol zusammen mit von 0,5 bis 30 Gew.-%, bezogen auf das Gesamtgewicht des Nahrungsmittels, einer Zuckerkomponente vorliegt.

8. Verfahren nach Anspruch 7, wobei die Zuckerkomponente einen oder mehrere Zucker umfaßt, die ausgewählt sind aus der Gruppe, die aus Xylose, Fructose, Glucose, Saccharose, Maltose, Lactose, Isomaltose, Isomalto-Oligosaccharid, Isomaltulose (Palatinose), Maissirup mit hohem Fructosegehalt, Maissirup (Maltodextrin), Maissiruptrockenmasse, Kopplungszucker, Fructo-Oligosaccharid, Galacto-Oligosaccharid und Invertzucker besteht.

9. Verfahren nach Anspruch 1, wobei das Maltitol zusammen mit von 0,01 bis 20 Gew.-%, bezogen auf das Gesamtgewicht des Nahrungsmittels, einer Intensivsüßmittelkomponente vorliegt.

10. Verfahren nach Anspruch 9, wobei die Intensivsüßmittelkomponente ein oder mehrere Intensivsüßmittel umfaßt, die ausgewählt sind aus der Gruppe, die aus Aspartame, Alitame, Acesulfam-K, Trichlorsaccharose (Sueralose), Steviosid, Rebaudiosid-A und Saccharin besteht.

11. Verfahren nach Anspruch 1, wobei das Maltitol zusammen mit von 0,1 bis 25 Gew.-%, bezogen auf das Gesamtgewicht des Nahrungsmittels, Polydextrose vorliegt.

12. Verfahren nach Anspruch 1, wobei das Maltitol in einer Menge von 1 bis 35 Gew.-%, bezogen auf das Gesamtgewicht des Nahrungsmittels, vorliegt.

13. Verfahren nach Anspruch 1, wobei das Maltitol in einer Menge von 5 bis 27 Gew.-%, bezogen auf das Gesamtgewicht des Nahrungsmittels, vorliegt.

## Revendications

1. Procédé de préparation d'un aliment basse-calorie, à faible teneur en matières grasses, amélioré, qui comprend l'étape consistant à remplacer totalement ou partiellement les matières grasses de l'aliment par une quantité, efficace quant au goût, de maltitol.

2. Procédé selon la revendication 1, dans lequel l'aliment contient jusqu'à 80 % en poids de matières grasses et est choisi parmi les gâteaux au chocolat et aux noisettes, les garnissages de pâtés, les desserts congelés, les assaisonnements pour salades, les pâtes à tartiner, les gâteaux, les biscuits, les préparations pour boissons en poudre et autres aliments qui renferment habituellement des matières grasses.

3. Procédé selon la revendication 1, dans lequel les matières grasses sont choisies parmi le saindoux, les lipides provenant des vaches, du poisson ou des plantes, les matières grasses du lait, le beurre, le fromage, la graisse de cuisine, la margarine, l'huile pour cuisson et la graisse pour cuisson.

4. Procédé selon la revendication 1, dans lequel le maltitol est une composition renfermant de 75 à 99 % en poids de dissacharide hydrogéné, de 0 à 4 % en poids de monosaccharide hydrogéné, de 1 à 11 % en poids de trisaccharide hydrogéné et de 0 à 10 % en poids de tétrasaccharide et/ou polysaccharides supérieurs hydrogénés, ces pourcentages étant rapportés au poids total de la composition.

5. Procédé selon la revendication 1, dans lequel le maltitol est présent conjointement avec 0,5 à 25 % en poids, par rapport au poids total de l'aliment, d'un constituant alcool de sucre.

6. Procédé selon la revendication 5, dans lequel le constituant alcool de sucre comprend un ou plusieurs alcools de sucre choisis parmi le xylitol, le sorbitol, le mannitol, le sirop de glucose hydrogéné (HGS), l'hydrolysat d'amidon hydrogéné (HSH), la palatinite et le lactitol.

7. Procédé selon la revendication 1, dans lequel le maltitol est présent conjointement avec 0,5 à 30 % en poids, par rapport au poids total de l'aliment, d'un constituant sucre.

8. Procédé selon la revendication 7, dans lequel le constituant sucre comprend un ou plusieurs sucres choisis parmi le xylose, le fructose, le glucose, le sucrose, le maltose, le lactose, l'isomaltose, l'isomalto-oligosaccharide, l'isomaltuloise (palatinose), le sirop de maïs riche en fructose, le sirop de maïs (maltodextrine), le sirop de maïs déshydraté, le sucre de couplage, le fructo-oligosaccharide, le galacto-oligosacharide et le sucre interverti.

9. Procédé selon la revendication 1, dans lequel le maltitol est présent conjointement avec 0,01 à 20 % en poids, par rapport au poids total de l'aliment, d'un constituant édulcorant fort.

10. Procédé selon la revendication 9, dans lequel le constituant édulcorant fort comprend un ou plusieurs édulcorants forts choisis parmi l'aspartame, l'alitame, l'acésulfame-K, le trichlorosucrose (sucralose), le stévioside, le rebaudioside-A et la saccharine.

11. Procédé selon la revendication 1, dans lequel le maltitol est présent conjointement avec 0,1 à 25 % en poids, par rapport au poids total de l'aliment, de polydextrose.

12. Procédé selon la revendication 1, dans lequel le maltitol est présent en une proportion de 1 à 35 % en poids, par rapport au poids total de l'aliment.

13. Procédé selon la revendication 1, dans lequel le maltitol est présent en une proportion de 5 à 27 % en poids, par rapport au poids total de l'aliment.